# EUROPÄISCHE PATENTSCHRIFT

(11) **EP 1 089 902 B1**
(45) Veröffentlichungstag und Bekanntmachung des Hinweises auf die Patenterteilung: **04.01.2006**
(21) Anmeldenummer: 00909031.7
(22) Anmeldetag: 09.02.2000
(51) Int. Cl.: B60T 8/40, F04B 19/02, F04B 53/10

(54) **KOLBENPUMPE**
PISTON PUMP
POMPE A PISTON

(30) Priorität: 22.04.1999 DE 19918127
(43) Veröffentlichungstag der Anmeldung: 11.04.2001
(73) Patentinhaber: ROBERT BOSCH GMBH, 70442 Stuttgart (DE)
(72) Erfinder: SCHULLER, Wolfgang, D-74343 Sachsenheim (DE)
(86) Internationale Anmeldenummer: PCT/DE2000/000396
(87) Internationale Veröffentlichungsnummer: WO 2000/064717

(56) Entgegenhaltungen:
- DE-A- 3 133 111
- DE-A- 4 107 979
- DE-A- 19 739 904
- FR-A- 957 606
- US-A- 2 433 812
- US-A- 2 981 198

## Beschreibung

### Stand der Technik

Die Erfindung betrifft eine Kolbenpumpe mit den Merkmalen des Oberbegriffs des Anspruchs 1, die insbesondere zur Verwendung in einer schlupfgeregelten, hydraulischen Fahrzeugbremsanlage vorgesehen ist.

Eine derartige Kolbenpumpe ist beispielsweise aus der FR 957 606A, US 2 433 812 A oder US 2 981 198 A bekannt.

Eine aus der DE 41 07 979 A1 bekannte Kolbenpumpe weist einen zylindrischen, bolzenförmigen Kolben auf, der spanend mit Nuten (Hinterschneidungen) und Querbohrungen sowie einem axialen Sackloch hergestellt ist. Die Herstellung des Kolbens ist durch die spanende Bearbeitung aufwendig und teuer. Der Kolben ist axial verschieblich in einer Pumpenbohrung eines Pumpengehäuses geführt und mittels eines rotierend antreibbaren Exzenters zu einer in axialer Richtung hin-und hergehenden Hubbewegung antreibbar. Ein Verdrängungsraum der Kolbenpumpe schließt sich auf einer Stirnseite des Kolbens in der Pumpenbohrung an den Kolben an. Dies hat den Nachteil, daß die bekannte Kolbenpumpe lang ist und ein großes Bauvolumen benötigt.

### Vorteile der Erfindung

Die erfindungsgemäße Kolbenpumpe mit den Merkmalen des Anspruchs 1 weist einen Kolben auf, der als Hohlkolben ausgebildet ist und dessen Innenraum einen Verdrängungsraum der Kolbenpumpe bildet. Die Ausbildung des Kolbens als Hohlkolben und die dadurch mögliche Verlegung des Verdrängungsraums in den Kolben hinein ermöglicht eine kurzbauende Kolbenpumpe mit kompaktem Aufbau. In eine offene Seite des Kolbens ragt ein feststehendes Innenteil hinein, welches den Verdrängungsraum auf einer Seite des Kolbens begrenzt. Durch das in den Kolben hineinragende Innenteil läßt sich ein Totvolumen des Verdrängungsraums, also ein minimales Volumen des Verdrängungsraums am Ende eines Förderhubs, nahezu auf Null reduzieren, wodurch ein hoher Wirkungsgrad der Kolbenpumpe erreicht wird. Der Kolben der erfindungsgemäßen Kolbenpumpe ist als Umformteil durch Umformen, beispielsweise durch Tiefziehen, Kaltschlagen oder Fließpressen hergestellt. Der Kolben ist beispielsweise rohr- oder hülsenförmig mit einer ihn auf einer Seite verschließenden, mit ihm einstückigen Kolbenstirnwand ausgebildet. Er weist, jedenfalls vor dem Zusammenbau mit dem Innenteil, keine Hinterschneidungen auf und ist dadurch in einem Arbeitsgang schnell und einfach durch Umformen herstellbar. Zur Erhöhung der Verschleißfestigkeit kann der Kolben gehärtet sein, eine sonstige Bearbeitung oder Nachbearbeitung wie beispielsweise eine Feinbearbeitung seiner Oberfläche erübrigen sich. Der Kolben ist dadurch preisgünstig und schnell herstellbar.

Die Unteransprüche haben vorteilhafte Ausgestaltungen und Weiterbildungen der im Anspruch 1 angegebenen Erfindung zum Gegenstand.

Gemäß Anspruch 2 ist der Kolben als Stufenkolben ausgebildet, d. h. er ist an zwei axial voneinander beabstandeten Stellen auf unterschiedlichen Durchmessern in einer Pumpenbohrung in einem Pumpengehäuse geführt und abgedichtet. Durch die Ausbildung des Kolbens als Stufenkolben ergibt sich ein den Kolben umschließender Ringraum, dessen Volumen sich während der hin-und hergehenden Hubbewegung des Kolbens abwechselnd vergrößert und verkleinert. Während eines Förderhubs des Kolbens, bei dem sich das Volumen des Verdrängungsraums verkleinert, vergrößert sich das Volumen des Ringraums, wodurch Fluid von der Kolbenpumpe in den Ringraum angesaugt wird. Während eines Rückhubs des Kolbens verkleinert sich zwar das Volumen des Ringraums, jedoch vergrößert sich das Volumen des Verdrängungsraums mehr als sich das Volumen des Ringraums verkleinert, wodurch die Kolbenpumpe Fluid ansaugt. Durch die Ausbildung ihres Kolbens als Stufenkolben saugt die erfindungsgemäße Kolbenpumpe also sowohl während des Förder- als auch während des Rückhubs. Dies hat den Vorteil, daß ein Ansaugvolumenstrom gleichmäßiger ist, was das Ansaugverhalten und eine Füllung des Verdrängungsraums der Kolbenpumpe verbessert.

Bei einer Ausgestaltung der Erfindung gemäß Anspruch 3 weist das Innenteil eine Hinterschneidung auf, die der Kolben hintergreift. Der Kolben und das Innenteil bilden eine Vormontagebaugruppe; sie sind unverlierbar miteinander verbunden. Vorteil dieser Ausgestaltung der Erfindung ist die einfache Handhabbarkeit der den Kolben und das Innenteil umfassenden Vormontagebaugruppe bis zu ihrem Einbau in ein Pumpengehäuse. Nach dem Einbau der Vormontagebaugruppe in das Pumpengehäuse wird die Sicherung des Kolbens auf dem Innenteil nicht mehr benötigt, da der Kolben vom Exzenter auf dem Innenteil gesichert ist. An die Güte und Festigkeit der Verbindung des Kolbens und des Innenteils werden daher nur geringe Ansprüche gestellt.

Gemäß Anspruch 4 ist im Innenteil ein Rückschlagventil (Auslaßventil) untergebracht, welches eine Fluiddurchflußrichtung von mit der Kolbenpumpe gefördertem Fluid durch die Kolbenpumpe steuert. Durch die Unterbringung des Rückschlagventils im Innenteil wird Bauraum eingespart und ein kompakter Aufbau der Kolbenpumpe erzielt.

Bei einer Weiterbildung gemäß Anspruch 5 weist das Rückschlagventil einen Ventilschließkörper auf, der von einer Ventilschließkörperführung in einer Ventilhubrichtung geführt ist. Es ist mindestens ein Fluiddurchlaß vorgesehen, durch den bei geöffnetem Rückschlagventil Fluid den Ventilschließkörper überströmen kann. Durch den Fluiddurchlaß ist es möglich, die Ventilschließkörperführung eng in bezug auf den Ventilschließkörper zu tolerieren. Die eng tolerierte Ventilschließkörperführung hat den Vorteil einer Geräuschverringerung, da sie Seitwärtsbewegungen des geöffneten, von einem Ventilsitz abgehobenen Ventilschließkörpers, die von Fluid, welches den Ventilschließkörper umströmt, angeregt werden, von der Ventilschließkörperführung weitgehend verhindert werden. Bei einer Ausgestaltung der Erfindung weist die Ventilschließkörperführung Führungsrippen auf, die in Ventilhubrichtung verlaufen und die beispielsweise in Form eines Vielnut-Innenprofils gebildet sind. Zwischen den Führungsrippen bestehen Durchlaßnuten, die zusammen eine große Fluiddurchlaßfläche aufweisen, wodurch sich bei eng tolerierter Ventilschließkörperführung ein niedriger Strömungswiderstand des Rückschlagventils ergibt.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

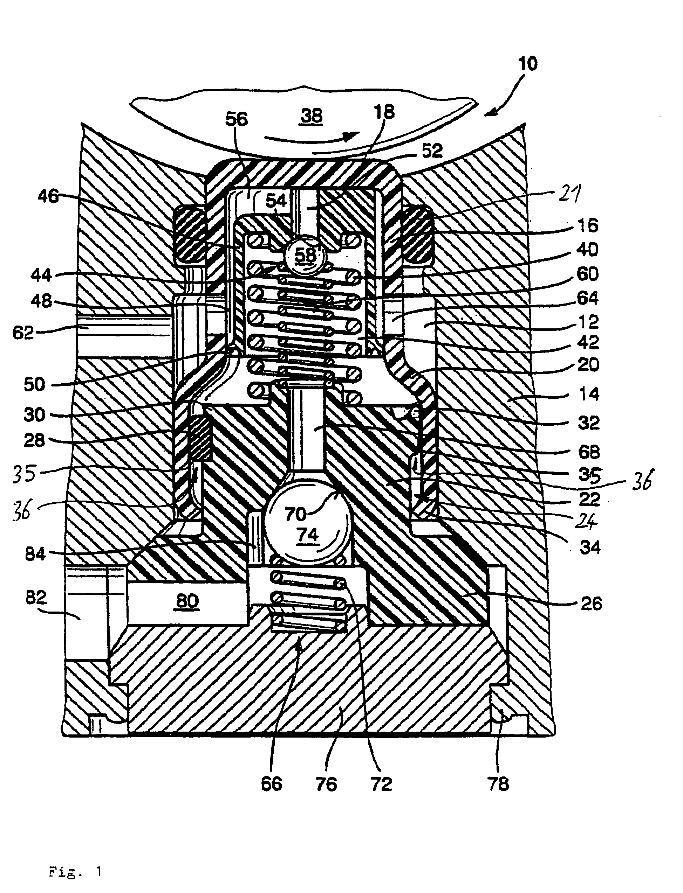

Die Erfindung wird anhand eines in der Zeichnung dargestellten, bevorzugt ausgewählten Ausführungsbeispiels näher erläutert. Die einzige Figur zeigt eine erfindungsgemäße Kolbenpumpe im Achsschnitt.

### Beschreibung des Ausführungsbeispiels

Die in der Zeichnung dargestellte, erfindungsgemäße Kolbenpumpe 10 ist in eine Pumpenbohrung 12 in einem ein Pumpengehäuse 14 bildenden Hydraulikblock eingesetzt. Der Hydraulikblock, von dem in der Zeichnung lediglich ein die Kolbenpumpe 10 umgebendes Bruchstück dargestellt ist, ist Bestandteil einer im übrigen nicht dargestellten, hydraulischen Steuerschaltung für eine hydraulische, schlupfgeregelte Fahrzeugbremsanlage. In den Hydraulikblock sind außer der Kolbenpumpe 10 weitere hydraulische Bauelemente wie Magnetventile eingesetzt und hydraulisch miteinander verschaltet.

Die Kolbenpumpe 10 weist einen als Hohlkolben ausgebildeten Kolben 16 auf, der hülsenförmig ist und dessen eine Stirnseite von einer mit dem Kolben 16 einstückigen Kolbenstirnwand 18 verschlossen ist. Ungefähr in seiner Längsmitte erweitert sich der Kolben 16 mit einer Ringstufe 20 auf einen größeren Durchmesser in Richtung seines offenen Endes. Der Kolben 16 ist als Stufenkolben ausgebildet, d. h. er ist im Bereich seiner beiden Enden auf unterschiedlichen Durchmessern abgedichtet. An seinem von der Kolbenstirnwand 18 verschlossenen Ende ist der Kolben 16 mit einem in eine umlaufende Nut in der Pumpenbohrung 12 eingesetzten Dichtring 21 abgedichtet, der außen am Kolben 16 anliegt. An seinem offenen Ende ist der Kolben 16 mit einem noch zu beschreibenden Dicht- und Führungsring 28 oder mit einer noch zu beschreibenden Dichtlippe 32 abgedichtet, der/die innen am Kolben 16 anliegt. Der Dicht- und Führungsring 28 bzw. die Dichtlippe 32 liegen auf einem größeren Durchmesser am Kolben 16 an und dichten den Kolben 16 auf einem größeren Durchmesser ab als der Dichtring 21 am geschlossenen Ende des Kolbens 16. Durch die Abdichtung des Kolbens 16 auf unterschiedlichen Durchmessern bildet der Kolben 16 einen Stufenkolben, der bewirkt, daß die Kolbenpumpe 10 sowohl während eines Förder- als auch während eines Rückhubs Fluid ansaugt, was ein Saugverhalten der Kolbenpumpe 10 verbessert. Abweichend vom dargestellten Ausführungsbeispiel kann der Kolben 16 als sog. Einfachkolben ausgebildet sein, der im Bereich seiner beiden Enden auf gleichen Durchmessern abgedichtet ist. Dazu müßte im dargestellten Ausführungsbeispiel die Ringstufe 20 den Kolbenradius um die Kolbenwandstärke erweitern. Eine weitere Möglichkeit wäre es, den Kolben 16 ohne Stufung herzustellen und an beiden Enden außen abzudichten.

Der Kolben 16 weist bei seiner Herstellung keinerlei Hinterschneidung auf, er ist daher problemlos und einfach durch Umformen herstellbar. Im dargestellten Ausführungsbeispiel ist der Kolben 16 durch Tiefziehen aus einem Metallblech hergestellt. Er ist zur Erhöhung seiner Verschleißfestigkeit gehärtet, eine sonstige Bearbeitung/Nachbearbeitung findet nicht statt.

In das offene Ende des Kolbens 16 ragt ein zapfenförmiger Ansatz 22 eines Innenteils 24 hinein, das feststehend in der Pumpenbohrung 12 angebracht ist. Der zapfenförmige Ansatz 22 steht einstückig von einer kreisrunden Fußscheibe 26 des Innenteils 24 ab, mit der das Innenteil 24 in der Pumpenbohrung 12 befestigt ist. Der Kolben 16 ist im durchmessergrößeren Bereich axial verschieblich auf dem zapfenförmigen Ansatz 22 geführt und abgedichtet. Zur Führung und Abdichtung sind im dargestellten Ausführungsbeispiel der Erfindung in der linken und rechten Bildhälfte zwei verschiedene Möglichkeiten dargestellt. Es wird betont, daß die beiden dargestellten Möglichkeiten nicht gemeinsam verwirklicht werden können. Die Darstellung der beiden Möglichkeiten gemeinsam in einer Figur dient der Vergleichbarkeit der beiden Möglichkeiten.

In der linken Bildhälfte ist ein Dicht- und Führungsring 28 auf den zapfenförmigen Ansatz 22 aufgesetzt und durch eine Anzahl von Verstemmungen 30 am Umfang des zapfenförmigen Ansatzes 22 gehalten. Der Dicht- und Führungsring 28 liegt dichtend am Innenumfang des Kolbens 16 an. Bei dieser Ausgestaltung der Erfindung gemäß der linken Bildhälfte kann das Innenteil 24 mit dem zapfenförmigen Ansatz 22 beispielsweise aus Stahl hergestellt sein.

Bei der in der rechten Bildhälfte dargestellten Ausführungsform der Erfindung ist das Innenteil 24 beispielsweise durch Spritzgießen aus Kunststoff hergestellt. Sein zapfenförmiger Ansatz 22 weist eine mit ihm einstückige, umlaufende Dichtlippe 32 auf, die dichtend am Innenumfang des Kolbens 16 anliegt und den Kolben 16 axial verschieblich führt. Durch diese Ausgestaltung der Erfindung wird ein separater Dicht- und Führungsring eingespart.

Um den Kolben 16 bis zur Montage der Kolbenpumpe 10 im Pumpengehäuse 14 verliersicher mit dem Innenteil 24 zu verbinden, ist ein freier Rand 34 des Kolbens 16 nach dem Aufsetzen des Kolben 16 auf das Innenteil 24 beispielsweise durch Bördein oder Rollieren radial nach Innen umgeformt. Der nach innen umgeformte freie Rand 34 hintergreift eine am Innenteil 24 vorgesehene Ringstufe 35. Die Ringstufe 35 bildet eine Hinterschneidung 36 des Innenteils 24. Bei der in der linken Bildhälfte gezeigten Ausführung wird die Ringstufe 35 für die Hinterschneidung 36 dadurch gebildet, daß der Dicht- und Führungsring 28 am Umfang des zapfenförmigen Ansatzes 22 des Innenteils 24 radial übersteht. Bei der in der rechten Bildhälfte dargestellten Ausführung ist die Ringstufe 35 direkt an den zapfenförmigen Ansatz 22 des Innenteils 24 angeformt. Die verliersichere Verbindung des Kolbens 16 mit dem Innenteil 24 ergibt eine Vormontagebaugruppe, die die Handhabbarkeit bei der Lagerung, beim Transport und bei der Montage im Pumpengehäuse 14 wesentlich vereinfacht.

Zum Antrieb des Kolbens 16 zu seiner axial in der Pumpenbohrung 12 hin- und hergehenden Hubbewegung weist die Kolbenpumpe 10 einen elektromotorisch rotierend antreibbaren Exzenter 38 auf, gegen dessen Umfang der Kolben 16 mit seiner Kolbenstirnwand 18 von einer als Schraubendruckfeder ausgebildeten Kolbenrückstellfeder 40 gedrückt wird. Die Kolbenrückstellfeder 40 ist im Innenraum des Kolbens 16 angeordnet, sie stützt sich am zapfenförmigen Ansatz 22 des Innenteils 24 ab und drückt die Kolbenstirnwand 18 gegen den Umfang des Exzenters 38. Der Innenraum des Kolbens 16, der von dem in die offene Seite des Kolbens 16 hineinragenden zapfenförmigen Ansatz 22 begrenzt wird, bildet einen Verdrängungsraum 42 der Kolbenpumpe 10, dessen Volumen sich mit der hin- und hergehenden Hubbewegung des Kolbens 16 abwechselnd verkleinert und vergrößert, wodurch die Kolbenpumpe 10 in an sich bekannter Weise Fluid (Bremsflüssigkeit) fördert.

Ein Einlaßventil 44 der Kolbenpumpe 10 ist in dem den Verdrängungsraum 42 bildenden Innenraum des Kolbens 16 untergebracht. Das Einlaßventil 44 ist als federbeaufschlagtes Rückschlagventil ausgebildet. Das Einlaßventil 44 weist einen topfförmigen Ventilsitzteil 46 auf, der als Kunststoffteil hergestellt ist und mit einem Boden innen an der Kolbenstirnwand 18 anliegt. Die Kolbenrückstellfeder 40 drückt das Ventilsitzteil 46 von innen gegen die Kolbenstirnwand 18 und hält dadurch das Ventilsitzteil 46 im Kolben 16.

Das Ventilsitzteil 46 weist einen kleineren Durchmesser als ein Innendurchmesser des Kolbens 16 auf, so daß ein Ringraum 48 zwischen dem Ventilsitzteil 46 und dem Kolben 16 besteht. Zur offenen Seite des Kolbens 16 hin schließt eine Dichtlippe 50 den Ringraum 48 ab. Die Dichtlippe 50 trennt den Verdrängungsraum 42 vom Ringraum 48. Der Boden des Ventilsitzteils 46 ist von einem Mittelloch 52 durchsetzt, dessen Mündung als konischer Ventilsitz 54 des Einlaßventils 44 ausgebildet ist. Sternförmig im Boden des Ventilsitzteils 46 angebrachte Radialnuten 56 verbinden den Ringraum 48 mit dem Mittelloch 52.

Als Ventilschließkörper weist das Einlaßventil 44 eine Ventilkugel 58 auf, die von einer Schraubendruckfeder als Ventilschließfeder 60 gegen den Ventilsitz 54 gedrückt wird. Die Ventilschließfeder 60 stützt sich am zapfenförmigen Ansatz 22 des in den Kolben 16 hineinragenden Innenteils 24 ab.

Der Fluideinlaß in die Kolbenpumpe 10 erfolgt durch eine Einlaßbohrung 62, die im Pumpengehäuse 14 angebracht ist und radial in die Pumpenbohrung 12 mündet. Von der Pumpenbohrung 12 strömt Fluid durch aus einer Umfangswand des Kolbens 16 ausgestanzte Durchlaßöffnungen 64 in den Ringraum 48 zwischen dem Ventilsitzteil 46 und der Umfangswand des Kolbens 16 und von dort weiter durch die Radialkanäle 56 und das Mittelloch 52 zum Einlaßventil 44.

Ein Auslaßventil 66 der Kolbenpumpe 10 ist in einem axial durchgehenden Mittelloch 68 im Innenteil 24 untergebracht. Das Mittelloch 68 erweitert sich konisch unter Bildung eines Ventilsitzes 70. Eine Schraubendruckfeder als Ventilschließfeder 72 drückt eine Ventilkugel 74 als Ventilschließkörper gegen den Ventilsitz 70.

Die Ventilschließfeder 72 stützt sich an einer kreisförmigen Verschlußscheibe 76 ab, die in die Pumpenbohrung 12 eingesetzt ist. Die Verschlußscheibe 76 ist mit einer umlaufenden Verstemmung 78 des Pumpengehäuses 14 in der Pumpenbohrung 12 gehalten und verschließt die Pumpenbohrung 12 druckdicht. Die Verschlußscheibe 76 hält ihrerseits das Innenteil 24 an dessen Fußscheibe 26 fest in der Pumpenbohrung 12.

Durch das Auslaßventil 66 austretendes Fluid strömt durch sternförmig angeordnete Radialkanäle 80 zwischen der Fußscheibe 26 des Innenteils 24 und der Verschlußscheibe 76 in eine Auslaßbohrung 82, die radial zur Pumpenbohrung 12 im Pumpengehäuse 14 angebracht ist.

Die Ventilkugel 74 des Auslaßventils 66 umgebend weist das Mittelloch 68 im Innenteil 24 achsparallel angeordnete Führungsrippen 84 auf, die nach Art eines Innenrändels oder eines Vielnutprofils gebildet sind. Die Führungsrippen 84 führen die Ventilkugel 74 mit enger Radialtoleranz in Ventilhubrichtung, d. h. in axialer Richtung. Zwischen den Führungsrippen 84 bestehen Durchlaßnuten, die zusammengenommen eine große Fläche zum Durchlaß von durch das Auslaßventil 66 austretenden Fluids aufweisen.

## Patentansprüche

1. Kolbenpumpe (10) mit einem zu einer hin- und hergehenden Hubbewegung antreibbaren Kolben (16), wobei der Kolben (16) als Hohlkolben ausgebildet ist, dessen Innenraum einen Verdrängungsraum (42) der Kolbenpumpe (10) bildet und wobei die Kolbenpumpe (10) ein feststehendes Innenteil (24) aufweist, welches in eine offene Seite des Kolbens (16) hineinragt,
**dadurch gekennzeichnet,**
**dass** der Kolben (16) ein Umformteil ist und dass im Inneren des Kolbens (16) ein Ventilsitzteil (46) angeordnet ist, das einen bestehenden Ringraum (48) zwischen dem Ventilsitzteil (46) und der Innenwandung des Kolbens (16) von dem Verdrängungsraum (42) trennt und das den Ventilsitz (54) eines Einlassventils (44) ausbildet, welches eine Druckmittelverbindung vom Ringraum (48) zum Verdrängungsraum (42) steuert.

2. Kolbenpumpe nach Anspruch 1, **dadurch gekennzeichnet, daß** der Kolben (16) als Stufenkolben ausgebildet ist.

3. Kolbenpumpe nach Anspruch 1, **dadurch gekennzeichnet, daß** der Kolben (16) eine Hinterschneidung (36) des Innenteils (24) hintergreift.

4. Kolbenpumpe nach Anspruch 1, **dadurch gekennzeichnet, daß** im innenteil (24) ein eine Fluiddurchflußrichtung durch die Kolbenpumpe (10) steuerndes Rückschlagventil (66) untergebracht ist.

5. Kolbenpumpe nach Anspruch 4, **dadurch gekennzeichnet, daß** das Rückschlagventil (66) einen Ventilschließkörper (74) und eine Ventilschließkörperführung (84) aufweist, die den Ventilschließkörper (74) in einer Ventilhubrichtung führt, wobei die Ventilschließkörperführung (84) mindestens einen Fluiddurchlaß aufweist, durch den bei geöffnetem Rückschlagventil (66) Fluid am Ventilschließkörper (74) vorbeiströmen kann.

6. Kolbenpumpe nach Anspruch 5, **dadurch gekennzeichnet, daß** das Rückschlagventil (66) Führungsrippen (84) als Ventilschließkörperführung für den Ventilschließkörper (74) aufweist, wobei die Führungsrippen (84) Durchlaßnuten zwischen sich begrenzen, durch die bei geöffnetem Rückschlagventil (66) Fluid am Ventilschließkörper (74) vorbeiströmen kann.

## Claims

1. Piston pump (10) having a piston (16) which can be driven to execute a reciprocating lifting motion, the piston (16) being designed as a hollow piston whose interior forms a displacement space (42) of the piston pump (10), and the piston pump (10) having a stationary inner part (24) which protrudes into an open side of the piston (16), **characterized in that** the piston (16) is a shaped part and **in that** there is arranged on the inside of the piston (16) a valve seat part (46) which separates an existing annular space (48) between the valve seat part (46) and the inner wall of the piston (16) from the displacement space (42) and which forms the valve seat (54) of an inlet valve (44) which controls a pressure medium connection from the annular space (48) to the displacement space (42).

2. Piston pump according to Claim 1, **characterized in that** the piston (16) is designed as a stepped piston.

3. Piston pump according to Claim 1, **characterized in that** the piston (16) engages behind an undercut (36) of the inner part (24).

4. Piston pump according to Claim 1, **characterized in that** a nonreturn valve (66) which controls a direction of fluid flow through the piston pump (10) is accommodated in the inner part (24).

5. Piston pump according to Claim 4, **characterized in that** the nonreturn valve (66) has a valve-closing element (74) and a valve-closing element guide (84) which guides the valve-closing element (74) in a valve stroke direction, the valve-closing element guide (84) having at least one fluid passage through which fluid can flow past the valve-closing element (74) when the nonreturn valve (66) is open.

6. Piston pump according to Claim 5, **characterized in that** the nonreturn valve (66) has guide ribs (84) as the valve-closing element guide for the valve-closing element (74), the guide ribs (84) defining between them passage grooves through which fluid can flow past the valve-closing element (74) when the nonreturn valve (66) is open.

## Revendications

1. Pompe à piston (10) comportant un piston (16) pouvant être entraîné dans un mouvement linéaire de va-et-vient, dans laquelle le piston (16) a la conception d'un piston creux dont l'intérieur forme une chambre de refoulement (42) de la pompe à piston (10) et la pompe à piston (10) présente une partie intérieure fixe (24) qui fait saillie dans une partie ouverte du piston (16),
**caractérisée en ce que**
le piston (16) est une pièce ayant subi une mise en forme plastique et, à l'intérieur du piston (16), une partie de siège de soupape (46) sépare un espace annulaire (48), existant entre la partie de siège de soupape (46) et la paroi intérieure du piston (16), de la chambre de refoulement (42), et forme le siège (54) d'une soupape d'admission (44) qui régule la relation fluidique entre l'espace annulaire (48) et la chambre de refoulement (42).

2. Pompe à piston selon la revendication 1,
**caractérisée en ce que**
le piston (16) a la conception d'un piston étagé.

3. Pompe à piston selon la revendication 1,
**caractérisée en ce que**
le piston (16) s'engage derrière une contre-dépouille (36) de la partie intérieure (24).

4. Pompe à piston selon la revendication 1,
**caractérisée en ce qu'**
un clapet anti-retour (66) régulant une direction d'écoulement de fluide à l'intérieur de la pompe à piston (10) est logé dans la partie intérieure (24).

5. Pompe à piston selon la revendication 4,
**caractérisée en ce que**
le clapet anti-retour (66) présente un obturateur de soupape (74) et un guide d'obturateur de soupape (84) qui guide l'obturateur de soupape (74) dans une direction de levée de soupape, le guide d'obturateur de soupape (84) présentant au moins un passage de fluide par lequel peut s'écouler le fluide au niveau de l'obturateur de soupape (74) lorsque le clapet anti-retour (66) est ouvert.

6. Pompe à piston selon la revendication 5,
**caractérisée en ce que**
le clapet anti-retour (66) présente des nervures de guidage (84) servant de guide pour l'obturateur de soupape (74), ces nervures de guidage (84) définissant entre elles des rainures de passage par lesquelles le fluide peut s'écouler au niveau de l'obturateur de soupape (74) lorsque le clapet anti-retour (66) est ouvert.
